# EUROPÄISCHE PATENTSCHRIFT

(11) **EP 3 559 504 B1**
(45) Veröffentlichungstag und Bekanntmachung des Hinweises auf die Patenterteilung: **27.01.2021**
(21) Anmeldenummer: 17829983.0
(22) Anmeldetag: 22.12.2017
(51) Int. Cl.: F16G 13/16, G01L 5/10

(54) **ÜBERWACHUNGSSYSTEM FÜR DEN BETRIEB EINER ENERGIEFÜHRUNGSKETTE**
MONITORING SYSTEM FOR OPERATING AN ENERGY CHAIN
SYSTÈME DE SURVEILLANCE POUR LE FONCTIONNEMENT D'UNE CHAÎNE DE TRANSPORT D'ÉNERGIE

(30) Priorität: 23.12.2016 DE 202016107316 U
(43) Veröffentlichungstag der Anmeldung: 30.10.2019
(73) Patentinhaber: Igus GmbH, 51147 Köln (DE)
(72) Erfinder: HERMEY, Andreas, 53773 Hennef (DE); JAEKER, Thilo-Alexander, 53757 53757 Sankt Augustin (DE); BARTEN, Dominik, 53340 Meckenheim (DE); SCHMER, Konstantin, 50827 Köln (DE)
(74) Vertreter: Lippert Stachow Patentanwälte Rechtsanwälte
(86) Internationale Anmeldenummer: PCT/EP2017/084403
(87) Internationale Veröffentlichungsnummer: WO 2018/115449

(56) Entgegenhaltungen:
- DE-A1- 3 005 780
- DE-A1-102007 043 043
- US-A1- 2015 122 047

## Beschreibung

Die Erfindung betrifft allgemein die Überwachung des Betriebs wenigstens einer Energieführungskette oder einer ähnlichen aktiven bzw. dynamischen Leitungsführungseinrichtung.

Energieführungsketten werden zum Führen mindestens einer Versorgungsleitung zwischen einer Basis bzw. einem Festpunkt und einem dazu relativbeweglichen Mitnehmer verwendet. Sie bilden dabei typisch ein bewegliches Trum, ein stationäres Trum und dazwischen einen Umlenkbogen, wobei der Umlenkbogen mit der halben Geschwindigkeit des Mitnehmers verfährt. Typisch führt die Energieführungskette mehrere Versorgungsleitungen, wie Kabel zur elektrischen Leistungs- und/oder Signalversorgung und Schläuche zur Versorgung mit flüssigen oder gasförmigen Betriebsmitteln.

Im Normalbetrieb bzw. bei bestimmungsgemäßem Betrieb der Energieführungskette wird das bewegliche Trum durch den Mitnehmer in Verfahrrichtung gezogen bzw. geschoben. Die Kette verursacht aufgrund von Reibung und Trägheit eine der Bewegung entgegengesetzte Kraft und wird, je nach Länge und Gewicht, z.T. erheblichen Zug- bzw. Druckkräften ausgesetzt. Besonders wegen Druckkräften kann es, vor allem bei Energieführungsketten mit hohen Geschwindigkeiten und/oder langen Verfahrwegen, während des Betriebs zu Fehlerzuständen kommen. Der Normalbetrieb der Energieführungskette kann wegen Verschleiß, aber auch aufgrund eines externen Fehlers oder Defekts, zum Beispiel eines Steuerungsfehlers, der zur Überschreitung des maximalen Verfahrwegs führt, oder eines Störobjekts bzw. Hindernisses gestört werden. In derartigen Fällen kann es zu Fehlerzuständen der Kette kommen, wie z.B. zu einem Ausbrechen des beweglichen Trums in Schubrichtung vor dem Umlenkbogen, etwa eines vom ordnungsgemäßen Verlauf abweichenden Bogenverlaufs, zu einem Austreten aus einer Führung, bis hin zum Bruch der Kette.

Die Erfindung betrifft in diesem Kontext insbesondere ein Überwachungssystem zur frühzeitigen Erkennung solcher Fehlerzustände, wobei das System mit mindestens einem Geber, der wenigstens eine vom Zustand der Energieführungskette abhängige Ausgabe erzeugt und mit einer Auswerteeinheit ausgerüstet ist. Die Auswerteeinheit wertet die Ausgabe des Gebers aus, um zu überwachen, ob im Betrieb der Energieführungskette ein kritischer Zustand auftritt, insbesondere bevor die Energieführungskette mit den darin geführten Leitungen beschädigt wird.

Ein solches System ist bereits aus der WO 2004/090375 A1 bekannt und wurde durch die Anmelderin erfolgreich am Markt eingeführt. Hierbei wird durch einen oder mehrere als Kraftsensor ausgebildete Geber erfasst, welche Kräfte auf die Energieführungskette wirken. Die Auswerteeinheit vergleicht die erfassten Kräfte mit einem vorbestimmten, eingelernten Toleranzbereich, um zu erkennen, ob eine Fehlfunktion eintritt. Eine Weiterentwicklung des Kraftsensors wird in der WO 2013/156607 A1 vorgeschlagen.

In der WO 2009/095470 A1 bzw. EP 2 235 396 A1 ist ebenfalls eine Kraftmessung zwecks Sicherheitsabschaltung offenbart. Dabei wird die Energieführungskette in Abhängigkeit einwirkender Kräfte von der versorgten Anlage, Maschine oder dgl. getrennt.

Diese vorbekannten Ansätze überwachen, ob unzulässig hohe Kräfte auftreten, um gegebenenfalls bereits vor einer Beschädigung, insbesondere vor einem Bruch, der Energieführungskette einzugreifen. Auf Grundlage einer Kraftmessung lassen sich viele Störfälle früh erkennen.

Die WO 2009/095470 A1 (vgl. S. 11) schlägt ferner vor, entlang des Verfahrweges eine Anzahl Kontaktmittel vorzusehen, welche in Kontakt mit der Energieführungskette gelangen können. Diese Kontaktmittel generieren ein Signal, dessen Auswertung eine Betriebsänderung, insbesondere die vorgenannte Trennung der Energieführungskette von der Maschine veranlassen kann.

Ein weiterer Ansatz, der nicht auf Kraftmessung beruht, wurde von der Anmelderin im Gebrauchsmuster DE 20 2004 005 858 U1 vorgeschlagen. Hier wird, bei einer Auswahl der Kettenglieder der Energieführungskette, jeweils am oder im Kettenglied ein schalterartiger Geber angeordnet, mit dem Verschwenkungen des Kettengliedes über einen bestimmten Winkelbereich hinaus registrierbar sind. Hierzu kann z.B. ein als Quecksilberschalter ausgeführter Schwerkraftschalter vorgesehen sein, welcher die räumliche Orientierung des jeweiligen Kettenglieds erfasst. Anhand einer Mehrzahl derartiger Geber in der Energieführungskette lässt sich die aktuelle Lage überwachen, z.B. dahingehend, ob der Umlenkbogen einen nominalen Verlauf zeigt. Diese Lösung erlaubt zwar eine Früherkennung ist jedoch aufwendig, da eine Anzahl zusätzlicher Vorrichtungen an bzw. in der Energieführungskette einzubauen ist und damit erheblicher Verkabelungsaufwand verbunden ist.

Es sind ferner auch gattungsfremde Systeme bekannt, die nur einen bereits eingetretenen Kettenbruch erkennen. Dies erlaubt jedoch keine Früherkennung, z.B. für vorbeugende Wartung, und vermeidet einen unerwünschten Ausfall nicht.

Eine erste Aufgabe der vorliegenden Erfindung ist es mithin, eine einfache, insbesondere mit weniger Herstellungsaufwand verbundene, und dennoch robuste Lösung zur Überwachung des Betriebs einer Energieführungskette vorzuschlagen, welche eine frühzeitige Erkennung von Fehlerzuständen erlaubt.

Als eine Lösung der genannten Aufgabe schlägt die vorliegende Erfindung ein Überwachungssystem mit den Merkmalen des Anspruchs 1 bzw. eine Anordnung nach Anspruch 15 vor. Vorteilhafte Ausführungsformen des Überwachungssystems sind Gegenstand der Unteransprüche.

Die Energieführungskette ist allgemein eine aktive, dynamische Leitungsführungseinrichtung zum Führen mindestens einer Leitung zwischen einer ersten Anschlussstelle der Energieführungskette an einer Basis und einer dazu relativbeweglichen zweiten Anschlussstelle der Energieführungskette an einem Mitnehmer. Typischerweise ist die Basis ortsfest, und der Mitnehmer ist relativbeweglich, z.B. an einem bewegten Teil einer zu versorgenden Maschine oder Anlage angeordnet. Die Energieführungskette umfasst in an sich bekannter Weise ein bewegliches Trum, ein stationäres Trum und einen beide Trume verbindenden Umlenkbogen dazwischen. Typischerweise verläuft die Bewegung der Energieführungskette in einer Ebene. Im Rahmen der Erfindung liegen jedoch auch Verläufe mit seitlicher Bewegung oder dreidimensionaler Bewegung, z.B. bei Robotern.

Das gattungsgemäße Überwachungssystem umfasst eine beliebige Energieführungskette sowie mindestens einen Geber, der wenigstens eine vom Zustand der Energieführungskette abhängige Ausgabe erzeugt. Die Ausgabe kann insbesondere kontinuierlich oder in kurzen Zeitabständen erfolgen. Ferner wertet das gattungsgemäße System die wenigstens eine Ausgabe des Gebers aus, vorzugsweise anhand einer separaten Auswerteeinheit. Der Begriff Ausgabe (engl. "output") ist hier allgemein im Sinne einer Information zu verstehen. Sie wird typischerweise durch ein oder mehrere auszuwertende elektrische Signale, digital oder analog, übermittelt. Auch eine räumlich im oder am Geber integrierte Auswerteeinheit liegt im Rahmen der Erfindung.

Die Auswertung vergleicht vorzugsweise laufend oder mit hoher Frequenz den am Ausgang des Gebers als Ausgabe erzeugten Zustandswert mit einem vorbestimmten Toleranzbereich bzw. Toleranzfeld, um frühzeitig zu erkennen, ob im Betrieb der Energieführungskette ein Fehlerzustand, z.B. unerwünschte Lage oder inkorrekter Verlauf, auftritt. Bei einer als kritisch festgestellten Diskrepanz kann die Auswerteeinheit ein Signal zum Anhalten des bewegten Maschinenteils, mit dem der Mitnehmer verbunden ist ausgeben, um einem Bruch der Energieführungskette vorzubeugen. Der Toleranzbereich kann auf Soll- bzw. Vergleichswerten beruhen, die in einem Anlern-Modus der Auswerteeinheit vorbestimmt werden. Dies erfolgt z.B., indem der normale Betrieb schrittweise durchlaufen wird und die Auswerteeinheit die als Normale bzw. Referenzwerte anzusehenden, zur Auswertung nötigen Betriebsparameter aufzeichnet.

Erfindungsgemäß wird die Aufgabe bereits dadurch gelöst, dass der Geber berührungslos funktioniert, d.h. als berührungslos erfassender Geber ausgebildet ist. Der Geber kann hierdurch ohne mechanischen Kontakt, d.h. ohne mechanische Einwirkung der Energieführungskette auf den/die sensitiven bzw. erfassend wirkenden Bestandteile des Gebers eine relevante Zustandsgröße der Energieführungskette erfassen. Ein berührungsloses Wirkprinzip des Gebers ermöglicht, dass zwischen dem Geber und dem Bereich der Energieführungskette, dessen Zustandsgröße erfasst wird, ein Abstand vorliegt. Der Geber kann insbesondere von außen in Bezug auf die Energieführungskette eine relevante Zustandsgröße dieser erfassen.

Der Geber kann insbesondere von der Lage der Energieführungskette im allgemeinen, ihrer genauen Position oder ihrem kinematischen Verhalten, insbesondere von der Geschwindigkeit, abhängig bzw. diesbezüglich sensitiv arbeiten. Als relevante Zustandsgröße kommen also insbesondere die Position und/oder die Geschwindigkeit eines Teilbereichs der Energieführungskette in Betracht. Der Teilbereich kann dabei in Bezug auf die Energieführungskette zeitvariabel sein, wie etwa ein Längsabschnitt, der einen festgelegten Raumbereich durchläuft, z.B. der Mitnehmer, der Umlenkbogen, ein Bereich zwischen Umlenkbogen und Mitnehmer usw. Es muss sich also nicht um einen gleichbleibenden Längsabschnitt aus der Energieführungskette handeln. Es kann auch ein dynamisch variierender Teilbereich der Kette, z.B. der Umlenkbogen oder ein Teilbereich, der eine vorbestimmte raumfeste Zone in dem zur Bewegung erforderlichen Bauraum durchläuft betrachtet werden.

Der Geber wirkt also erfindungsgemäß aus einer Distanz ganz allgemein mit der Energieführungskette zusammen. Der Geber kann dazu insbesondere relativ zur Energieführungskette so angeordnet werden, dass er aus einer Distanz mit zumindest einem entsprechenden Teilbereich, insbesondere des Umlenkbogens und/oder des beweglichen Trums zusammenwirkt. So kann der erfindungsgemäße Geber berührungslos einen vom dynamischen Verhalten der Energieführungskette abhängigen Wert ausgeben, insbesondere abhängig von der Momentan-Position und/oder der Momentan-Geschwindigkeit des zusammenwirkenden Bereichs. Die Ausgabe am Geberausgang kann von einer zeitvariablen Entfernung zwischen dem Geber und dem zusammenwirkenden Bereich der Energieführungskette abhängig sein. Der Bereich kann einen teilweisen Längsabschnitt der Energieführungskette umfassen oder im Wesentlichen die gesamte Kette umfassen. Insbesondere der zeitvariable Umlenkbogen und/oder ein Längsabschnitt der unmittelbar an den Mitnehmer anschließt, ggf. bis hin zum Umlenkbogen, kann mit dem Geber zusammenwirken.

Besonders geeignet sind berührungslose Geber, die in Bezug auf den zusammenwirkenden Teilbereich der Energieführungskette positionsempfindlich, d.h. in der Art von Entfernungsmessgeräten, oder unmittelbar geschwindigkeitsempfindlich, d.h. wie Geschwindigkeitsmessgeräte (ohne Aussage über die Absolut-Position), arbeiten.

Das erfindungsgemäße Überwachungssystem bietet eine Vielzahl Umsetzungsmöglichkeiten und eine Reihe von Vorteilen im Vergleich zu bekannten Überwachungssystemen. Zum einen ist das System besonders robust, d.h. wenig störanfällig, da das Erfassungssystem selbst wegen berührungsloser Erfassung - ausgenommen die Energieführungskette - keine beweglichen Teile beinhalten muss. Des Weiteren ermöglicht das System den Einsatz eines einzigen Gebers oder nur weniger, z.B. bis zu vier redundante Geber, und ist damit kostengünstig.

Der Geber kann besonders bevorzugt außerhalb der Kette bzw. extern angeordnet sein. Extern angeordnet bedeutet vor allem, dass der Geber nicht in oder an relativbeweglichen Kettengliedern und nicht im kraftübertragend wirkenden Teil der Energieführungskette angeordnet sein muss, anders als bei den bisherigen Systemen erforderlich. Der Geber kann jedoch auch am Mitnehmer bzw. am fest mit dem Mitnehmer verbundenen Endbefestigungsglied der Kette angebracht sein, d.h. vorzugsweise nicht an einem der zueinander relativbeweglichen Kettenglieder. Damit ist keine oder eine höchstens geringfügige Veränderung der Energieführungskette erforderlich, wodurch Herstellung, Installation und Wartung des Überwachungssystems, aber auch der überwachten Energieführungskette einfach sind.

Ein oder mehrere berührungslose Geber können somit - anstatt unmittelbar an oder in den für Fehlerzustände potentiell anfälligen Längsabschnitten bzw. Kettengliedern - räumlich getrennt von anfälligen Abschnitten der Energieführungskette angeordnet werden und dennoch die kritischen Bereiche überwachen. Hierdurch sind die Geber selbst inhärent vor Auswirkungen von Fehlerzuständen geschützt.

Vorzugsweise ist der Geber räumlich so orientiert bzw. so angeordnet, dass sein Erkennungsbereich im Wesentlichen in Längsrichtung bzw. parallel zum Verfahrweg der Energieführungskette ausgerichtet ist. Dadurch kann mit nur einem oder jedenfalls mit nur wenigen Gebern bereits zumindest ein überwiegender Teil des Verfahrwegs der Energieführungskette überwacht werden. So kann beispielsweise der optische Strahlengang eines Laser-Entfernungsmessgeräts, einer Lichtschranke oder dgl. in der vertikalen Mittelebene der Energieführungskette liegen. Es kann z.B. auch die Hauptachse bzw. Mittelsymmetrieebene des Sichtfelds einer Kamera oder eines Scanners oder dgl. entsprechend parallel zur Verfahrebene eingestellt werden usw. Die Ausrichtung kann dabei etwa mittig auf die Breite der Energieführungskette, oder aber auf die Ebene der Seitenlaschen eines oder beider Laschenstränge, eingestellt sein je nachdem ob z.B. Querstege ähnlich einem Inkrementalzähler gezählt, oder eine präzisere Distanz, z.B. zum Umlenkbogen bestimmt werden soll.

In einer Ausführungsform ist ein oder jeder Geber so angeordnet, dass es von der momentanen Lage der Energieführungskette abhängt, welcher Längsabschnitt der Kette als Teilbereich mit dem Geber aktuell zusammenwirkt. Mit anderen Worten, derselbe Geber arbeitet mit einem raumfesten Erkennungsbereich, in dem zeitvariabel, je nach der Stellung der Energieführungskette, ein Teilbereich des Umlenkbogens und/oder des beweglichen Trums liegt.

Die Zusammenwirkung des Gebers mit dem Teilbereich kann insbesondere im Fehlerzustand und/oder im Normalbetrieb bestehen. Hierzu ist der Geber vorzugsweise auf einen raumfesten Bereich ausgerichtet, in dem zeitlich variabel und von der augenblicklichen Stellung abhängig aufeinanderfolgende Längsabschnitte der Energieführungskette durchlaufen.

In einer Variante wirkt der Geber sowohl im Fehlerzustand, als auch im Normalzustand der Kette mit mindestens einem Teilbereich zusammen. In einer anderen Variante wirkt der Geber nur im Fehlerzustand mit einem Teilbereich der Kette zusammen. Schließlich kann der Geber auch ausschließlich im Normalbetrieb mit mindestens einem Teilbereich der Kette zusammenwirken. Von Vorteil bei der ersten und letzten Variante ist es, dass ein längeres Ausbleiben der zu erwartenden Ausgabe eine Fehlfunktion des Gebers signalisiert, was eine bessere Erkennungssicherheit und eine signaltechnisch besonders robuste und zuverlässige Lösung bietet. In einer Variante wird in jedem Zustand der Energieführungskette im Wesentlichen der gesamte anfällige Bereich der Kette durch den Geber erfasst, was z.B. mit einer Kamera als Geber ein hinreichend großes Sichtfeld erfordert und Bildverarbeitung bedingt. Von Vorteil bei dieser Ausführungsform ist es jedoch, dass quasi alle möglichen Abweichungen vom bestimmungsgemäßen Betrieb der Kette erfasst werden können.

In allen Ausführungsformen ist der Geber vorzugweise als nicht-mechanisch erfassender Geber, insbesondere als optisch erfassender Geber ausgeführt. Die berührungslose Funktion des Gebers kann auf Lichtwellen im sichtbaren und/oder nicht sichtbaren Spektrum beruhen, z.B. mittels Laser-Entfernungsmessung. Alternativ sind auch andere nichtmechanische Prinzipien denkbar, z.B. auf Schallwellen beruhend, wie beispielsweise Ultraschall-Entfernungsmesser, welche jedoch weniger präzise und schwieriger einzustellen sind. Ebenfalls möglich sind elektrische oder magnetische Funktionsprinzipien die berührungslos erfassen.

Mit den vorstehend beschriebenen Kerngedanken kombinierbar, aber auch unabhängig hiervon, wird eine Lösung mit rein optischem Erfassungsprinzip jedoch für sich genommen als besonders bevorzugter, eigenständiger Erfindungsaspekt betrachtet.

In einer technisch einfach umsetzbaren und zuverlässigen optischen Ausführungsform ist der Geber als Entfernungs- oder Geschwindigkeitsmesser zur optischen Messung ausgeführt, z.B. als Laser-Entfernungs-Messgerät. Als Messung wird dabei das Ermitteln einer quantitativen Aussage über eine physikalische Größe verstanden. Der Geber muss jedoch kein eigentliches Messgerät sein, sondern kann z.B. für eine diskrete ja/nein Zustandserfassung, beispielsweise eine Lichtschranke für das Überwachen einer bestimmten Schwelle, wie etwa einer Raumhöhe, ausgeführt sein.

In einer zweiten optischen Ausführungsform ist der Geber als bildgebender Sensor zur digitalen Bildverarbeitung ausgeführt, welcher vorzugsweise einen überwiegenden Teil oder ggf. auch die gesamte Länge der Energieführungskette erfasst. Zur bildgebenden Erfassung kann der Geber insbesondere als sogenannter Vision-Sensor oder als Smart-Kamera für eine laufende Videoüberwachung ausgeführt sein. Diese Ausführungsform erlaubt eine zustandsunabhängige Erfassung der Energieführungskette, sowohl im Normalbetrieb als auch im Fehlerzustand, und damit eine größere Flexibilität bei der Zustandsdiskriminierung. Zudem können auch mehrere benachbarte Energieführungsketten mit demselben bildgebenden Sensor überwacht werden.

In einer insbesondere für bildgebende Sensoren vorteilhaften Ausführungsform ist an der Energieführungskette in Längsrichtung eine Reihenfolge von optisch wirksamen Erkennungsmerkmalen vorgesehen. Diese können von außen erfassbar mit dem Geber zusammenwirken. Geeignete Erkennungsmerkmale, z.B. Barcodes, Farbcodierung, Zahlen oder andere Symbole, können die rechentechnische Verarbeitung der Datenausgabe des bildgebenden Sensors in der Auswerteeinheit oder auch im bildgebenden Sensor deutlich vereinfachen. Zudem lässt sich anhand einer Abfolge voneinander unterscheidbarer Erkennungsmerkmale, ähnlich z.B. einer auf-/absteigenden Zahlenfolge, der Zustand der Energieführungskette deutlich einfacher bestimmen.

Der Geber erzeugt zeitkontinuierlich oder zeitdiskret in kurzen Abständen, insbesondere deutlich kleiner als der Quotient aus Teilung bzw. Gliederlänge und Maximalgeschwindigkeit der Kette, aktuelle Ausgabewerte zur erfassten Zustandsgröße und das System wertet diese zeitkontinuierlich oder zumindest mit entsprechend hoher Frequenz aus. Mit der Zustandsgröße ist allgemein eine Größe gemeint, welche den Zustand der Energieführungskette beschreibt, insbesondere die Position und/oder die Geschwindigkeit von zumindest einem überwachten Teilbereich des Umlenkbogens und/oder des beweglichen Trums.

In einer für verschiedenste Gebertypen und fast alle Anwendungsfälle der Energieführungskette geeigneten Ausführungsform erfasst der Geber eine Zustandsgröße des Umlenkbogens.

In einer Ausführungsform ist der Geber am Mitnehmer oder an der zweiten Anschlussstelle, insbesondere am Endbefestigungsteil des mitnehmerseitigen Endes der Energieführungskette, angeordnet. Der Vorteil dieser Anordnung liegt darin, dass der Geber zusammen mit der Energieführungskette gefertigt und ausgeliefert werden kann und damit vor Ort besonders leicht zu installieren ist. Dennoch ist der Geber nicht an einem störanfälligen Bereich der Energieführungskette angeordnet. Zudem kann bei Zusammenwirkung mit dem Umlenkbogen inhärent eine Relativmessung bzw. -erfassung erfolgen, bei welcher es auf sonstige Parameter der Anwendung nicht ankommt, z.B. auf die Dimensionierung einer Führungsrinne oder dgl. Insbesondere bei der vorgenannten Ausführungsform kann die Auswerteeinheit rechnerisch besonders einfach anhand der Ausgabe des Gebers eine Relativgeschwindigkeit oder ein Geschwindigkeitsverhältnis zwischen Mitnehmer und Umlenkbogen bestimmen und diesen Wert mit einem vorbestimmten Toleranzbereich vergleichen. Hierdurch wird ein Programmieren des Toleranzbereichs beim Hersteller ermöglicht, da es auf typische Randbedingungen der Endanwendung bzw. Installation, wie etwa absolute Geschwindigkeiten, nicht ankommt. Eine Abweichung vom typischen Verhältnis wonach der Umlenkbogen beim Verfahren die halbe Geschwindigkeit des Mitnehmers aufweisen soll, ist ein guter Indikator für eine Vielzahl Fehlerzustände, da diese überwiegend im Längsabschnitt zwischen Mitnehmer und Umlenkbogen auftreten.

In einer anderen Ausführungsform ist der Geber stationär, d.h. ortsfest und unbeweglich relativ zur Basis angeordnet, um eine Zustandsgröße des beweglichen Trums und/oder des Umlenkbogens zu erfassen. Von Vorteil bei der stationären Anordnung des Gebers ist es, dass diese Lösung besonders robust ist und keine Verkabelung durch die Energieführungskette erfordert, wenn die Steuerung stationär installiert ist. Sie muss jedoch meist vor Ort installiert werden.

Beispielsweise kann der Geber stationär oberhalb der Energieführungskette angeordnet sein, von wo aus er berührungslos die Lage von zumindest einem Teilbereich des beweglichen Trums und/oder des Umlenkbogens erfassen kann.

In einer weiteren stationären Variante kann der Geber im Wesentlichen auf Höhe des Umlenkbogens diesem gegenüberliegend angeordnet sein, um die Position und/oder Geschwindigkeit des Umlenkbogens zu erfassen.

In einer technisch einfachen und günstigen Ausführungsform ist der Geber als Lichtschranke ausgeführt und ist in vorbestimmter Höhe oberhalb des Umlenkbogens in der Bewegungsebene der Energieführungskette wirksam angeordnet. In dieser Variante spricht die Lichtschranke nur im Fehlerzustand, nämlich bei Überschreiten der vorbestimmten Höhe durch zumindest einen Teilbereich der Energieführungskette, auf diesen Teilbereich an. Bei dieser Ausführungsform löst ausschließlich das Auftreten eines bestimmten Fehlerzustandes der Kette die Lichtschranke aus.

In einer weiteren Ausführungsform ist der Geber als Induktionsschleife ausgeführt und in vorbestimmter Höhe oberhalb des Umlenkbogens, in der Bewegungsebene der Energieführungskette wirksam angeordnet. Auch bei dieser Ausführungsform wirkt der Geber ausschließlich für einen bestimmten Fehlerzustand, nämlich bei Überschreiten der vorbestimmten Höhe durch zumindest einen Teilbereich der Energieführungskette. Beim Auftreten dieses Fehlerzustandes der Kette gerät der aufgestiegene Teilbereich der Kette in die Induktionsschleife und löst damit eine elektrische Signalveränderung am Geberausgang aus. Diese Ausführungsform eignet sich gut für Energieführungsketten die inhärent ferromagnetische Eigenschaften haben, oder wenn wenigstens einige Kettenglieder mit ferromagnetischen Materialien versehen sind. Sie eignet sich insbesondere für Ketten mit Laschen aus Stahlblech.

Insbesondere bei einem bildgebenden berührungslosen Erfassungsprinzip kann ein Geber ohne weiteres mit zwei oder mehr Energieführungsketten zusammenwirken. Das erlaubt eine besonders kostensparende Überwachung im Betrieb von mehreren räumlich benachbarten Energieführungsketten.

Je nach verwendetem Typ können auch mehrere berührungslose Geber mit einer Energieführungskette zusammenwirken, z.B. für eine präzisere Erkennung oder bei besonders langen Verfahrwegen.

Die Energieführungskette umfasst vorzugsweise eine Vielzahl miteinander gelenkig verbundener Kettenglieder und ist insbesondere in einer Bewegungsebene zwischen zwei Endstellungen hin- und her fahrbar. Die Energieführungskette kann auch vertikal angeordnet sein und in vertikaler Richtung hin- und her fahrbar sein.

Ein Kettenglied hat dabei typisch zwei Seitenlaschen, mit breiten und schmalen Flächen, die durch Querstege lösbar oder nicht lösbar verbunden sind. Der Geber kann im Falle einer solchen Gliederkette berührungslos gezielt mit vorbestimmten Teilen der Kettenglieder zusammenwirken, z.B. mit den Schmalseiten der Seitenlaschen an einer Seite oder insbesondere mit den Querstegen, vorzugsweise an der radial außenliegenden Seite im Umlenkbogen. Die Schmalseiten der Seitenlaschen bilden einen in Längsrichtung quasi durchgehend erfassbaren Streifen bzw. Strang, die Querstege wegen im Vergleich zum Kettenglied kleiner Abmessung in Längsrichtung typischerweise ein periodisches Streifenmuster, wie bei Leitersprossen. Geeignete Erkennungsmerkmale können so insbesondere auch an den Querstegen vorgesehen oder in diese integriert sein.

Alle Ausführungsformen sind besonders vorteilhaft für Energieführungsketten mit abgleitendem oder abrollendem Obertrum, insbesondere für Energieführungsketten mit etwa horizontalem Verlauf die für lange Verfahrwege ausgeführt sind, typisch >5m, insbesondere >10m.

Die Erfindung betrifft ferner - ganz unabhängig von der Auswerteeinheit - eine Anordnung für ein Überwachungssystem umfassend eine Energieführungskette und mindestens einen erfindungsgemäß berührungslos erfassenden Geber, welcher gemäß einer der vorstehenden Ausführungsformen gestaltet und/oder angeordnet sein kann.

Die Erfindung betrifft ferner die Verwendung eines erfindungsgemäßen Überwachungssystems oder einer erfindungsgemäßen Anordnung zur Überwachung einer Energieführungskette dahingehend, ob im Betrieb der Energieführungskette ein Fehlerzustand, insbesondere ein unerwünschter Verlauf, auftritt.

Schließlich betrifft die Erfindung auch die Kombination aus erfindungsgemäßem Geber und Auswerteeinheit zum Nachrüsten einer bereits installierten Energieführungskette bzw. auch zum Erstausrüsten bestehender Kettengestaltungen (Katalogprodukte).

Das vorgeschlagene Überwachungssystem bzw. die vorgeschlagene Anordnung erlauben insbesondere eine zwecks Überwachung einer Energieführungskette hinreichend genaue und laufende Positionsbestimmung des Umlenkbogens in Bezug auf den Verfahrweg. Aus einer unerwarteten Positionsveränderung des Umlenkbogens lassen sich eine Vielzahl Störfälle auf einfache Weise erkennen.

Weitere vorteilhafte Merkmale und Wirkungen der Erfindung werden im Folgenden anhand einiger bevorzugter Ausführungsbeispiele unter Bezugnahme auf die beigefügten Zeichnungen näher erläutert. Es zeigen:
**FIG.1****:** als Prinzipskizze ein erstes Ausführungsbeispiel des erfindungsgemäßen Überwachungssystems mit einem optischen Geber und einer Auswerteeinheit in Seitenansicht;
**FIG.2A-2B****:** als Prinzipskizze ein zweites Ausführungsbeispiel des erfindungsgemäßen Überwachungssystems mit Lichtschranke in Seitenansicht, im Normalbetrieb (FIG.2A) sowie bei einem möglichen aber seltenen Fehlerzustand (FIG.2B);
**FIG.3****:** als Prinzipskizze ein drittes Ausführungsbeispiel des erfindungsgemäßen Überwachungssystems mit Induktionsschleife in Seitenansicht bei einem möglichen Fehlerzustand;
**FIG.4****:** als Prinzipskizze ein viertes Ausführungsbeispiel des erfindungsgemäßen Überwachungssystems basierend auf einer Abstandsmessung vom Mitnehmer zum Umlenkbogen in Seitenansicht und im Normalbetrieb;
**FIG.5****:** als Prinzipskizze ein fünftes Ausführungsbeispiel des erfindungsgemäßen Überwachungssystems mit einer Kamera als Geber in Seitenansicht, bei einem schematisch gezeigten, seltenen Fehlerzustand;
**FIG.6****:** als Prinzipskizze ein sechstes Ausführungsbeispiel des erfindungsgemäßen Überwachungssystems mit einer Kamera als Geber sowie einer mit Erkennungsmerkmalen markierten Energieführungskette in Seitenansicht, bei einem schematisch gezeigten, seltenen Fehlerzustand; und
**FIG.7****:** als Prinzipskizze ein siebtes Ausführungsbeispiel des erfindungsgemäßen Überwachungssystems mit mehreren berührungslosen Näherungsdetektoren als Gebern.

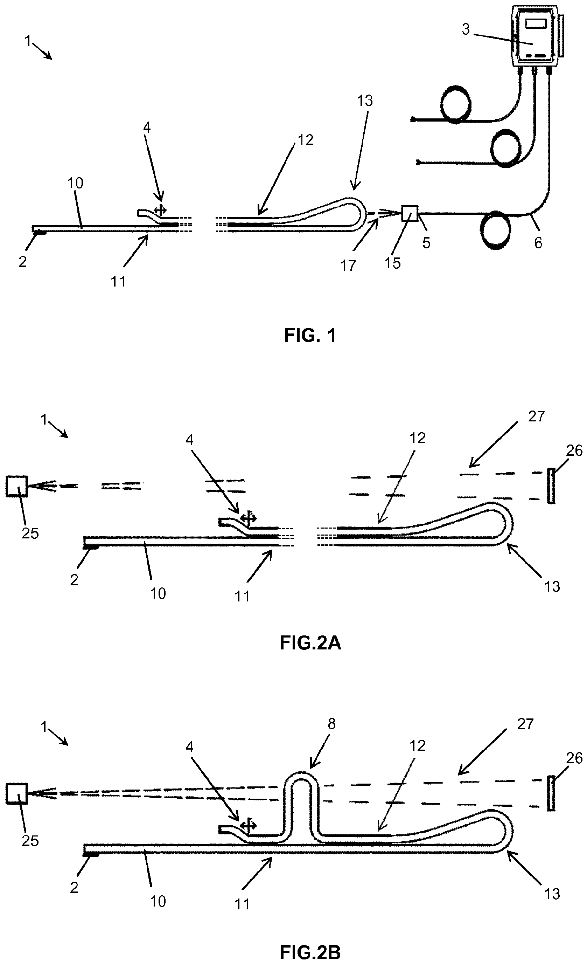

In allen Zeichnungen bezeichnen gleiche Bezugszeichen Merkmale mit gleichwertiger Beschaffenheit oder Wirkung. Zur Erleichterung sind manche gleichbleibende Merkmale aus FIG.1 nicht in FIG.2-6 wiederholt.

In der FIG.1 ist ein Überwachungssystem, allgemein mit 1 bezeichnet, mit einem Geber 15 und einer Auswerteeinheit 3 als wesentliche Baugruppen schematisch dargestellt. Das Überwachungssystem 1 überwacht, ob der Betrieb einer Energieführungskette 10 bestimmungsgemäß bzw. normal stattfindet. Die Energieführungskette 10 umfasst ein stationäres Trum 11, bei horizontaler Anordnung auch Untertrum genannt, ein bewegliches Trum 12, bei horizontaler Anordnung auch Obertrum genannt, sowie als variabler Übergang dazwischen einen verfahrbaren, etwa U-förmigen Umlenkbogen 13 mit einem vordefinierten Krümmungsradius. In FIG.1 ist eine sog. "gleitende", d.h. nicht freitragende Energieführungskette 10 gezeigt, bei welcher das bewegliche Trum 12 auf dem stationären Trum 11 abgleitet oder abrollt. Dabei ist der vordefinierte Krümmungsradius des Umlenkbogens 13, zum Schutz der geführten Leitungen (nicht gezeigt), deutlich grösser als der minimale Abstand zwischen den Trumen 11, 12. Das Überwachungssystem 1 nach FIG.1 eignet sich jedoch ebenfalls für freitragende Energieführungsketten (nicht gezeigt), d.h. wenn die Trume 11, 12 mit einem Abstand etwa gleich dem Krümmungsradius des Umlenkbogens 13 parallel zueinander einhalten bzw. gehalten werden.

Der Endbereich des stationären Trums 11 bildet eine erste Anschlussstelle der Energieführungskette 10 und ist an einer zur Umgebung raumfesten Basis befestigt, welche den Festpunkt 2 der Energieführungskette 10 bildet. Der Endbereich des beweglichen Trums 12 bildet eine zweite Anschlussstelle der Energieführungskette 10 und ist an einem Mitnehmer 4 befestigt, der relativ zum Festpunkt 2 beweglich ist, nämlich mit dem zu versorgenden, bewegenden Teil, z.B. von einer Industriemaschine oder -Anlage verbunden ist.

In an sich bekannter Weise bewegt sich der Mitnehmer 4, gemäß den in FIG.1-6 eingezeichneten Doppelpfeilen in eine Vorwärts- und Rückwärtsrichtung und zieht bzw. schiebt dabei die Energieführungskette 10. In FIG.1-6 ist der Mitnehmer 4 und damit die Stellung der Energieführungskette 10 rein beispielhaft, nur zur Veranschaulichung in Art einer Momentaufnahme als eine augenblickliche Zwischenposition dargestellt. Die in FIG.1-6 gezeigte Energieführungskette 10 ist somit für eine ebene Bewegung entlang der Vorwärts- und Rückwärtsrichtung, d.h. mit parallel bleibenden Trumen 11, 12 gestaltet und besteht im Wesentlichen aus Kettengliedern (nicht näher gezeigt), die um senkrecht zur Ebene der FIG.1-6 schwenkbare parallele Schwenkachsen gegeneinander abwinkelbar sind. Die Energieführungskette 10 kann ferner in einer in FIG.1-6 nicht näher gezeigten Vorrichtung seitlich geführt sein, z.B. in einer geeigneten Führungsrinne.

Im Ausführungsbeispiel nach FIG.1 wirkt ein einziger externer Geber 15 berührungslos, aus einer Distanz, mit dem Umlenkbogen 13 zusammen. In FIG.1 ist u.a. diese variable Distanz des Gebers 15 von dem Umlenkbogen 13 zur Vereinfachung nicht maßstabgerecht dargestellt. Der Geber 15 in FIG.1 ist ein optisch wirksamer Geber, z.B. ein Laser-Entfernungsmessgerät. Der Geber 15 ist ortsfest außerhalb der Energieführungskette 10 angeordnet. Die Anordnung ist so eingestellt, dass der Lichtstrahl in der Bewegungsebene verläuft und mit den Schmalseiten der Seitenlaschen oder den Querstegen der Kettenglieder (nicht näher gezeigt) der Energieführungskette 10 zusammenwirkt. Dabei ist der externe Geber 15 so ausgerichtet, dass der Umlenkbogen 13 bei jeder Stellung der Energieführungskette 10 im Strahlengang 17 des optischen Gebers 15 liegt. Der Geber 15 ist in FIG.1 zudem so angeordnet, dass er entlang des gesamten zu überwachenden Verfahrwegs der Energieführungskette 10 wirksam ist.

Der optische Geber 15 erfasst laufend, z.B. zeitkontinuierlich oder mit einer hinreichenden Frequenz, z.B. >100Hz, bevorzugt >500Hz, den Abstand vom ortsfesten Geber 15 zum Umlenkbogen 13 und damit auch die Position des Umlenkbogens 13 der Energieführungskette 10. Es ist auch möglich, mit einem optischen Prinzip unmittelbar die Geschwindigkeit des Umlenkbogens 13 als Ausgabe des Gebers 15 an die Auswerteeinheit 3 zu übermitteln.

Im Normalbetrieb bewegt sich der Umlenkbogen 13 mit einer Geschwindigkeit, die die Hälfte der konstanten Geschwindigkeit des Mitnehmers 4 beträgt, Beschleunigungs- und Bremsverzögerung ausgenommen. Beim Auftreten bestimmter Fehlerzustände der Energieführungskette 10, z.B. bei Aufbäumen eines Teilbereiches des beweglichen Trums 12 nach oben (beispielhaft in FIG.2B), bewegt sich ein Teil der Energieführungskette 10 in eine Richtung, die vom normalen Verfahrweg bzw. dem gewünschten Sollverlauf im Normalbetrieb abweicht. Dabei weicht typischerweise auch die Geschwindigkeit des Umlenkbogens 13 von der Geschwindigkeit im normalen Verlauf ab, und ist insbesondere niedriger als im Normalbetrieb. Auch am zeitlichen Verlauf der Position oder Geschwindigkeit des Umlenkbogens 13 ist somit eine entsprechende Abweichung vom normalen Verlauf anhand einer Entfernungs- oder Geschwindigkeits-Messung durch den optischen Geber 15 leicht zu diskriminieren.

Derartige Abweichungen vom Normalbetrieb werden im Ausführungsbeispiel nach FIG.1 durch den optischen Geber 15 erfasst und als Ausgabe am Ausgang 5 des Gebers 15 an die getrennt ausgeführte modulare Auswerteeinheit 3 signalmäßig weitergegeben. Hierzu kann die Auswerteeinheit 3 über eine Signalleitung 6, z.B. über eine digitale Datenschnittstelle wie einen geeigneten Feld-Bus, mit dem Ausgang 5 des Gebers verbunden sein. Jede geeignete Signalübertragung kommt hierfür in Betracht.

Die Auswerteeinheit 3 vergleicht die laufend vom Geber 15 erfassten bzw. gemessenen Werte ebenfalls laufend mit einem vorgegebenen Toleranzfeld bzw. Toleranzbereich, der z.B. in einer Anlernphase in der Auswerteeinheit 3 gespeichert wurde. Wenn die Auswerteeinheit 3 dabei eine kritische Diskrepanz feststellt, veranlasst die Auswerteeinheit 3 eine Sicherheitsmaßnahme, insbesondere zum Schutz der Energieführungskette 10. Die Auswerteeinheit 3 kann z.B. über eine weitere Signalleitung ein Signal abgeben, z.B. an die Steuerung der von der Energieführungskette 10 versorgten Maschine (nicht dargestellt), um einen Not-Stopp des beweglichen Maschinenteils, mit dem der Mitnehmer 4 verbunden ist, auszulösen.

Eine Auswerteeinheit 3, wie in FIG.1 schematisch dargestellt, ist auch bei den weiteren Ausführungsformen nach FIG.2 bis FIG.6 vorgesehen, aber zur Erleichterung nicht näher dargestellt. Anstelle einer externen modularen Auswerteeinheit 3, kann eine in den Geber integrierte Auswerteeinheit verwendet werden. Alternativ zu einem optischen Geber 15, kann z.B. ein ultraschallbasierter Geber ebenfalls zur Entfernungsmessung eingesetzt werden, da es auf die absolute Genauigkeit der Erfassung nicht ankommt. Dies wäre beispielsweise bei geschlossenen bzw. rohrförmigen Energieführungsketten 10 geeignet.

FIG.2 zeigt ein anderes Überwachungssystem 1 für die Energieführungskette 10 mit einem Geber 25 der berührungslos wirkt, jedoch nicht als Messgerät ausgeführt ist. In FIG.2 wirkt der Geber 25 wie eine konventionelle Lichtschranke. Dieser Geber 25 ist ebenfalls optisch erfassend und erzeugt mittels des Reflektors 26 eine Lichtschranke auf einer vorbestimmten Höhe oberhalb der gesamten Energieführungskette 10. Geber 25 mit Lichtquelle und -Sensor sowie der Reflektor 26 sind in einer Ebene ausgerichtet, durch die sich der Verfahrweg des beweglichen Trums 12 erstreckt. Der Strahlengang 27 der Lichtschranke hat dabei eine Hauptachse parallel zur Bewegungsachse des Mitnehmers 4 und ist von allen Bereichen der Energieführungskette 10 im Normalbetrieb vertikal beabstandet, gemäß einem vorbestimmten Schwellwert. Bei einer Fehlfunktion der Energieführungskette 10, die typisch während des Verfahrens des Mitnehmers 4 in Rückwärtsrichtung, d.h. bei Schubkraft vom Mitnehmer 4 auf den beweglichen Trum bis hin zum Umlenkbogen 13 auftritt, kann ein Teil des beweglichen Trums 12, zwischen dem Mitnehmer 4 und dem Umlenkbogen 13, in den Strahlengang 27 geraten und unterbricht dabei die Lichtschranke. Diese Unterbrechung wird von dem Geber 25 erfasst, und als Ausgabeinformation an die Auswerteeinheit 3 (FIG.l) weitergeleitet. Damit wirkt bei FIG.2 ein Teilbereich der Energieführungskette 10 nur im Fehlzustand mit dem Geber 25 zusammen.

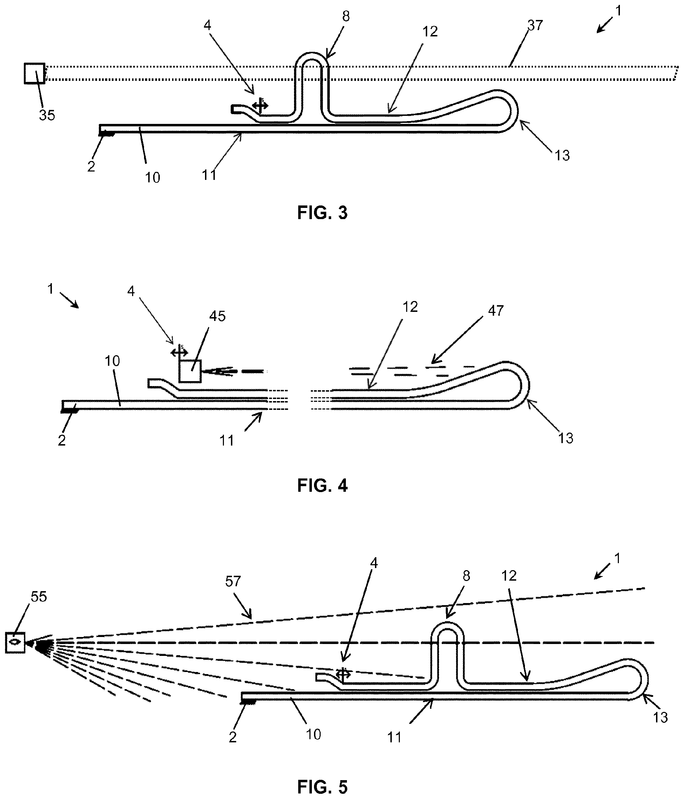

Wie in FIG.3 dargestellt, kann alternativ zum Prinzip einer Lichtschranke ein Geber 35 auch mit einer Induktionsschleife 37 berührungslos arbeiten. Die Energieführungskette 10 in FIG.3 umfasst zur Zusammenwirkung mit der Induktionsschleife 37 ein ferromagnetisches Material an mindestens einigen Stellen entlang der Längsrichtung. Inhärent für eine Induktionsschleife 37 geeignet sind z.B. Energieführungsketten 10 mit Gliedern aus Stahlblech-Laschen, oder Gliedern die zumindest teilweise aus einem ferromagnetischen Material gefertigt sind, z.B. mit entsprechenden eingesetzten Quer- oder Trennstegen. Wie bei FIG.2 wirkt auch in FIG.3 die Energieführungskette 10 im Normalbetrieb nicht mit dem Geber 35 zusammen. Bei einem kritischen Verlauf des beweglichen Trums 11 oder des Umlenkbogens 13 kann ein Teilbereich in den freien inneren Querschnitt der Induktionsschleife 37 geraten, oder sich diesem zumindest messbar annähern. Die so erzeugte Abweichung der Induktivität wird durch den Geber 35 messtechnisch erfasst und ein entsprechender Ausgabewert an die Auswerteeinheit 3 (FIG.l) übermittelt.

In FIG.4 ist ein weiteres Ausführungsbeispiel eines erfindungsgemäßen Überwachungssystems 1 dargestellt. Hier ist ein optisch erfassender Geber 45, z.B. ähnlicher Bauart wie in FIG.1, am Mitnehmer 4 angeordnet, um mit diesem zu verfahren. Der optische Geber 45 kann z.B. am beweglichen Maschinenteil oder am daran ortsfest angebrachten Endbefestigungsglied der Energieführungskette 10 befestigt sein.

In FIG.4 ist der Geber 45, z.B. ein Laser-Entfernungsmessgerät oder dgl., vom Mitnehmer 4 aus mit seinem optischen Strahlengang 47 etwa parallel zur Verfahr-Richtung auf den Umlenkbogen 13 gerichtet. Im Normalbetrieb der Energieführungskette 1 misst der Geber 45 so den zeitlich verändernden Relativabstand vom Mitnehmer 4 zum Umlenkbogen 13, oder unmittelbar die entsprechende Relativgeschwindigkeit. Der Relativabstand verringert sich im Normalbetrieb stetig wenn der Mitnehmer 4 in Vorwärtsrichtung verfährt und steigt stetig in die Rückwärtsrichtung. Die Relativgeschwindigkeit hingegen beträgt im stationären Fall die halbe Absolutgeschwindigkeit des Mitnehmers 4. Beim Auftreten eines Fehlerzustandes zeigt der Umlenkbogen ein abweichendes Verhalten, oder es kann z.B. ein Teilbereich des beweglichen Trums 12 in den Strahlengang 47 des Gebers 45 vom Mitnehmer 4 zum Umlenkbogen 13 aufsteigen. Dabei wird der Geber 45 einen vom Sollwert abweichenden Abstand messen, z.B. als erkennbaren Sprung, oder eine ungewöhnlich stark abweichende Relativgeschwindigkeit. Diese Abweichung wird vom Geber 45 unmittelbar oder ggf. nach Datenverarbeitung an die Auswerteeinheit 3 (FIG.1) übermittelt. Die Auswerteeinheit selbst kann auch einen Sprung detektieren, z.B. in laufend aus den Messwerten gebildeten gleitenden Mittelwerten. Beides erlaubt mit einer einfachen Anordnung das Erkennen fast aller typischer Fehlerzustände. Die Ausführungsform nach FIG.4 ist besonders gut geeignet, wenn die Steuerung der Maschine oder Anlage am beweglichen Teil selbst vorgesehen ist.

In FIG.5 ist ein weiteres Überwachungssystem 1 dargestellt, wobei der Geber 55 bildgebend, z.B. als digitale Video-Kamera, ausgeführt ist. Die digitale Kamera als Geber 55 ist so positioniert, dass sie die räumliche Anordnung quasi der gesamten Energieführungskette 10, jedenfalls des beweglichen Trums 11 und des Umlenkbogens 13, in allen bestimmungsgemäß vorgesehenen Stellungen des Normalbetriebs erfassen kann. So kann der bildgebend wirkende Geber 55 jede Abweichung und damit auch fast alle eventuellen Fehlerzustände der Energieführungskette 10, jedenfalls unerwünschte Verläufe gut erkennen. Vom Geber 55 wird laufend Information über die räumliche Anordnung der Energieführungskette 10 an die Auswerteeinheit 3 (FIG.l) weitergeleitet. In der Auswerteeinheit 3 wird nach rechentechnischer Bildverarbeitung mit einem vorgegebenen Toleranzfeld verglichen, um einen etwaigen Fehlerzustand zu erkennen. Der Geber 55 kann auch selbst, z.B. als sogenannter Vision-Sensor oder als Smart-Kamera, die Bilddaten-Verarbeitung ganz oder teilweise ausführen, und ggf. nur eine Information über normalen oder fehlerhaften Betrieb an die Auswerteeinheit 3 übermitteln.

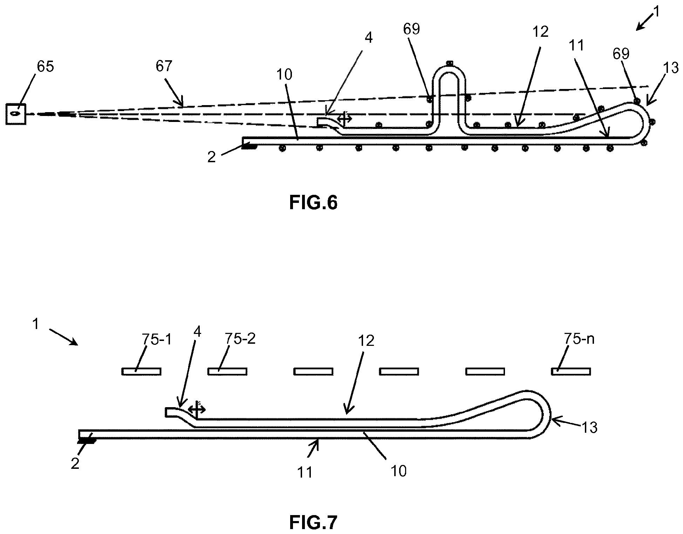

Im Ausführungsbeispiel nach FIG.6, ist der Geber 65 in Art eines optischen Scanners ausgeführt, um berührungslos mit der Energieführungskette 10 zusammenzuwirken. Bei FIG.6 sind wenigstens einige Stellen der Energieführungskette 10 in regelmäßigem Abstand, z.B. an jedem n-ten Kettenglied, mit optisch unterscheidbaren Markierungen 69 als Erkennungsmerkmalen für den Geber 65 versehen. Die Markierungen 69 liegen im Sichtfeld 67 des optischen Gebers 65 um von diesem abgelesen zu werden. Die Markierungen 69 können z.B. als Barcode, Farbmarkierungen, kontrastreiche Symbolfolge oder dgl., realisiert sein. Die Markierungen 69 sind in einer vordefinierten Reihenfolge entlang der Länge der Energieführungskette 10 vorgesehen. Gemäß FIG.6 ist der Geber 65, z.B. als Barcodescanner, mit einem relativ flachen Sichtfeld 67 auf den Teilbereich ausgerichtet, der beim Verfahren den mitnehmerseitigen Teilbereich des Umlenkbogens 13 bildet. Der Geber 65 scannt laufend die Reihenfolge der Markierungen, die im Bereich des Umlenkbogens 13 im Sichtfeld 67 erscheinen. Zumindest die Information, ob eine bestimmungsgemäße Abfolge der Markierungen 69 erkannt wird, wird an die Auswerteeinheit 3 (FIG.l) weitergegeben. Die Auswerteeinheit 3 selbst kann auch vom Geber 65 die erfassten Markierungen 69 erhalten und die Reihenfolge mit einer vorgegebenen Reihenfolge vergleichen, die im Normalbetrieb 1 vorliegt. Bei Auftreten eines Fehlerzustandes der Energieführungskette 10, werden die Markierungen 69 nicht in der normalen Abfolge im Sichtfeld 67 erscheinen, sondern nicht korrekt erfasst oder in fehlerhafter Abfolge. Dadurch sind viele Fehlerzustände auch mit gegenüber FIG.5 geringerem Bildverarbeitungsaufwand gut zu erkennen. Ein scanner-artiger Geber 65 gemäß FIG.6 kann zusammen mit Erkennungsmerkmalen z.B. auch in einer Anordnung ähnlich FIG.4 installiert werden.

Die Lösungen, insbesondere nach FIG.5-6, eignen sich auch zum Überwachen mehrerer EFK. Die verschiedenen Ansätze zur berührungslosen Erfassung nach FIG.1-6 lassen sich auch untereinander kombinieren, z.B. um die Erfassungssicherheit zu steigern oder unterschiedliche Fehlerzustände besser diskriminieren zu können.

Im weiteren Ausführungsbeispiel nach FIG.7 sind eine Anzahl von berührungslosen Gebern 75-1 bis 74-n in größerem Abstand oberhalb des Umlenkbogens 13 entlang des Verfahrwegs angeordnet. Die Geber 75-1 bis 75-n, können dabei beispielsweise als Metalldetektoren, kapazitive Näherungsdetektoren oder dgl. ausgeführt sein. Hierbei kann die Auswerteeinheit 3 einen Vektor aus analogen Signalwerten der Geber 75-1 bis 75-n mit einem Soll-Vektor vergleichen. Bei unerwartetem Sprung in einer Vektorkomponente über einen Schwellwert hinaus kann die Auswerteeinheit 3 auf ein Fehlverhalten der Energieführungskette 1 schließen.

Aus den beschriebenen Ausführungsbeispielen ist ersichtlich, dass das erfindungsgemäß berührungslose Überwachungssystem für den Betrieb einer Energieführungskette einfach aufgebaut ist und in der Lage ist, durch seinen berührungslos erfassenden Geber und die Auswerteeinheit, an die die erfassten Informationen geleitet werden, einen eventuellen Fehlerzustand der Kette zuverlässig zu erkennen.

Mit einem der vorgeschlagenen Geber 15; 25; 35; 45; 55; 65; 75 in Kombination mit einer geeigneten elektronischen Auswerteeinheit 3 können auch bereits installierte Energieführungsketten 10 mit relativ wenig Aufwand nachgerüstet werden.

### Bezugszeichenliste

FIG.1-6
1 Überwachungssystem
2 Festpunkt
3 Auswerteeinheit
4 Mitnehmer
5 Ausgang
6 Signalleitung
8 Fehlerzustand
10 Energieführungskette
11 Stationäres Trum
12 Bewegliches Trum
13 Umlenkbogen
15; 25; 35; 45; 55; 65; 75 Geber
26 Reflektor
17; 27; 47 Strahlengang
37 Induktionsschleife
57; 67 Sichtfeld
69 Markierung

## Patentansprüche

1. Überwachungssystem (1) für den Betrieb einer Energieführungskette zum Führen mindestens einer Leitung, wie z.B. eines Kabels, Schlauchs oder dergleichen, zwischen einer ersten Anschlussstelle an einer Basis (2) und einer dazu relativbeweglichen zweiten Anschlussstelle an einem Mitnehmer (4), umfassend
eine Energieführungskette (10) die ein bewegliches Trum (12), ein stationäres Trum (11) und dazwischen einen Umlenkbogen (13) bildet;
mindestens einen Geber, der wenigstens eine vom Zustand der Energieführungskette abhängige Ausgabe erzeugt; und
eine Auswerteeinheit (3) die die wenigstens eine Ausgabe des Gebers auswertet, wobei die Auswerteeinheit vorzugsweise mit einem vorbestimmten Toleranzbereich vergleicht, um zu überwachen, ob im Betrieb der Energieführungskette (10) ein Fehlerzustand auftritt; **dadurch gekennzeichnet, dass**
der Geber (15; 25; 35; 45; 55; 65; 75) berührungslos arbeitet und so angeordnet ist, dass der Geber (15; 25; 35; 45; 55; 65; 75) aus einer Distanz mit zumindest einem Teilbereich des Umlenkbogens (13) und/oder einem Teilbereich des beweglichen Trums (11) zusammenwirkt, und eine Ausgabe erzeugt, die von der Position und/oder der Geschwindigkeit des zusammenwirkenden Bereichs der Energieführungskette (10) abhängig ist.

2. Überwachungssystem nach Anspruch 1, **dadurch gekennzeichnet, dass** der Geber (15; 25; 35; 45; 65; 75) so angeordnet ist, dass der Erkennungsbereich des Gebers in Längsrichtung Energieführungskette (10) ausgerichtet ist.

3. Überwachungssystem nach Anspruch 1 oder 2, **dadurch gekennzeichnet, dass** der Geber als nicht-mechanisch erfassender Geber, insbesondere als optisch erfassender Geber (15; 25; 35; 45; 55; 65) ausgeführt ist.

4. Überwachungssystem nach Anspruch 3, **dadurch gekennzeichnet, dass** der Geber (15; 25; 45) als Entfernungs- oder Geschwindigkeitsmesser zur optischen Messung ausgeführt ist.

5. Überwachungssystem nach Anspruch 3, **dadurch gekennzeichnet, dass** der Geber als bildgebender Sensor (55; 65) zur digitalen Bildverarbeitung ausgeführt ist.

6. Überwachungssystem nach einem der Ansprüche 1 bis 4, insbesondere nach Anspruch 5, **dadurch gekennzeichnet, dass** an der Energieführungskette (10) in Längsrichtung eine Reihenfolge von Erkennungsmerkmalen (69) vorgesehen ist, die von außen erfassbar sind, insbesondere optisch erfassbar sind.

7. Überwachungssystem nach einem der Ansprüche 1 bis 6, insbesondere nach Anspruch 4, **dadurch gekennzeichnet, dass** der Geber (15; 45; 65) eine Zustandsgröße des Umlenkbogens (13) erfasst, insbesondere die Position und/oder Geschwindigkeit des Umlenkbogens.

8. Überwachungssystem nach einem der Ansprüche 1 bis 7, insbesondere nach Anspruch 7, **dadurch gekennzeichnet, dass** der Geber (45) am Mitnehmer (4) oder an der zweiten Anschlussstelle angeordnet ist.

9. Überwachungssystem nach einem der Ansprüche 1 bis 8, insbesondere nach Anspruch 8, **dadurch gekennzeichnet, dass** es eine Relativgeschwindigkeit oder ein Geschwindigkeitsverhältnis zwischen Mitnehmer (4) und Umlenkbogen (13) bestimmt und den so bestimmten Wert mit einem vorbestimmten Toleranzbereich vergleicht.

10. Überwachungssystem nach einem der Ansprüche 1 bis 7, **dadurch gekennzeichnet, dass** der Geber (15; 25; 35; 55; 65) stationär angeordnet ist, um eine Zustandsgröße des beweglichen Trums (12) und/oder des Umlenkbogens zu erfassen.

11. Überwachungssystem nach Anspruch 10, **dadurch gekennzeichnet, dass** der Geber (15; 25; 35; 45)
- oberhalb der Energieführungskette (10) angeordnet ist und die Lage von zumindest einem Teilbereich des beweglichen Trums (12) und/oder des Umlenkbogens (13) erfasst; oder
- im Wesentlichen auf Höhe des Umlenkbogens (13) diesem gegenüberliegend angeordnet ist, um die Position und/oder Geschwindigkeit des Umlenkbogens (13) zu erfassen.

12. Überwachungssystem nach Anspruch 10, **dadurch gekennzeichnet, dass**
- der Geber (25) mit einer Lichtschranke ausgeführt ist und nur in einem Fehlerzustand mit einem Teilbereich zusammenwirkt; oder
- der Geber (35) mit einer Induktionsschleife ausgeführt ist und nur in einem Fehlerzustand mit einem Teilbereich zusammenwirkt.

13. Überwachungssystem nach einem der vorstehenden Ansprüche, **dadurch gekennzeichnet, dass**
- der Geber (55; 65) mit zwei oder mehr Energieführungsketten zusammenwirkt; und/oder
- dass mehrere Geber (75) mit der Energieführungskette (10) zusammenwirken.

14. Überwachungssystem nach einem der vorstehenden Ansprüche, **dadurch gekennzeichnet, dass** die Energieführungskette eine Vielzahl miteinander gelenkig verbundener Kettenglieder umfasst und insbesondere in einer Bewegungsebene zwischen zwei Endstellungen hin und her fahrbar ist.

15. Anordnung für ein Überwachungssystem für den Betrieb einer Energieführungskette, insbesondere nach einem der vorstehenden Ansprüche 1 bis 14, umfassend eine Energieführungskette (10) zum Führen mindestens einer Leitung, wie z.B. eines Kabels, Schlauchs oder dergleichen, zwischen einer ersten Anschlussstelle an einer Basis (2) und einer dazu relativbeweglichen zweiten Anschlussstelle an einem Mitnehmer (4), wobei die Energieführungskette (10) ein bewegliches Trum (12), ein stationäres Trum (11) und dazwischen einen Umlenkbogen (13) bildet;
mindestens einen Geber, der wenigstens eine vom Zustand der Energieführungskette abhängigen Ausgabe erzeugt;
**dadurch gekennzeichnet, dass**
der Geber (15; 25; 35; 45; 55; 65) berührungslos arbeitet und so angeordnet ist, dass der Geber aus einer Distanz mit zumindest einem Teilbereich des Umlenkbogens und/oder des beweglichen Trums zusammenwirkt, um eine Ausgabe zu erzeugen, die von der Position und/oder der Geschwindigkeit des zusammenwirkenden Bereichs abhängt.

## Claims

1. A monitoring system (1) for the operation of an energy chain for guiding at least one line, such as a cable, hose or the like, between a first connection point at a base (2) and a relatively movable thereto second connection point at an entrainment member (4), comprising
an energy chain (10) which forms a movable strand (12), a stationary strand (11) and a deflection bend (13) therebetween;
at least one sensor generating at least one output dependent on the condition of the energy chain; and
an evaluation unit (3) which evaluates the at least one output of the sensor, the evaluation unit preferably comparing with a predetermined tolerance range in order to monitor whether a fault condition occurs during operation of the energy chain (10);
**characterized in that**
the sensor (15; 25; 35; 45; 55; 65; 75) operates contactlessly and is arranged so that the sensor (15; 25; 35; 45; 55; 65; 75) interacts from a distance with at least a subregion of the deflection bend (13) and/or a subregion of the movable strand (12), and generates an output that is dependent on the position and/or the speed of the interacting region of the energy chain (10).

2. The monitoring system according to claim 1, **characterized in that** the sensor (15; 25; 35; 45; 65; 75) is arranged so that the detection range of the sensor is oriented in the longitudinal direction of the energy chain (10).

3. The monitoring system according to claim 1 or 2, **characterized in that** the sensor is configured as a non-mechanically detecting sensor, in particular as an optically detecting sensor (15; 25; 35; 45; 55; 65).

4. The monitoring system according to claim 3, **characterized in that** the sensor (15; 25; 45) is configured as a distance meter or a velocimeter for optical measurement.

5. The monitoring system according to claim 3, **characterized in that** the sensor is configured as an imaging sensor (55; 65) for digital image processing.

6. The monitoring system according to one of claims 1 to 4, in particular according to claim 5, **characterized in that** a series of recognition features (69) is provided on the energy chain (10) in the longitudinal direction, which features are detectable from the outside, in particular are optically detectable.

7. The monitoring system according to one of claims 1 to 6, in particular according to claim 4, **characterized in that** the sensor (15; 45; 65) detects a condition variable of the deflection bend (13), in particular the position and/or speed of the deflection bend.

8. The monitoring system according to one of claims 1 to 7, in particular according to claim 7, **characterized in that** the sensor (45) is arranged on the entrainment member (4) or at the second connection point.

9. The monitoring system according to one of claims 1 to 8, in particular according to claim 8, **characterized in that** it determines a relative speed or a speed ratio between the entrainment member (4) and deflection bend (13) and compares the value thus determined with a predetermined tolerance range.

10. The monitoring system according to one of claims 1 to 7, **characterized in that** the sensor (15; 25; 35; 55; 65) is arranged stationary in order to detect a condition variable of the movable strand (12) and/or of the deflection bend.

11. The monitoring system according to claim 10, **characterized in that** the sensor (15; 25; 35; 45)
- is arranged above the energy chain (10) and detects the position of at least a subregion of the movable strand (12) and/or the deflection bend (13); or
- is arranged essentially at the height of the deflection bend (13) opposite this, in order to detect the position and/or speed of the deflection bend (13).

12. The monitoring system according to claim 10, **characterized in that**
- the sensor (25) is configured with a photoelectric barrier and interacts with a subregion only in a fault condition; or
- the sensor (35) is configured with an induction loop and interacts with a subregion only in a fault condition.

13. The monitoring system according to any one of the preceding claims, **characterized in that**
- the sensor (55; 65) interacts with two or more energy chains; and/or
- that several sensors (75) interact with the energy chain (10) .

14. The monitoring system according to one of the preceding claims, **characterized in that** the energy chain comprises a plurality of chain links hingedly connected to each other and in particular is movable back and forth in a plane of movement between two end positions.

15. An arrangement for a monitoring system for the operation of an energy chain, in particular according to one of the preceding claims 1 to 14, comprising
an energy chain (10) for guiding at least one line, such as a cable, hose or the like, between a first connection point at a base (2) and a relatively movable thereto second connection point at an entrainment member (4), the energy chain (10) forming a movable strand (12), a stationary strand (11) and a deflection bend (13) therebetween;
at least one sensor generating at least one output dependent on the condition of the energy chain; **characterized in that**
the sensor (15; 25; 35; 45; 55; 65) operates contactlessly and is arranged so that the sensor interacts from a distance with at least a subregion of the deflection bend and/or of the movable strand to generate an output, which depends on the position and/or the speed of the interacting region.

## Revendications

1. Système de surveillance (1) pour le fonctionnement d'une chaîne porte-câbles destinée à guider au moins une ligne, telle qu'un câble, un tuyau ou similaire, entre un premier point de raccordement sur une base (2) et un second point de raccordement sur un élément d'entraînement (4) et mobile par rapport au premier, comprenant
une chaîne porte-câbles (10) qui forme un brin mobile (12), un brin fixe (11) et un arc de déflexion (13) entre les deux brins;
au moins un capteur générant au moins une sortie en fonction de l'état de la chaîne porte-câbles; et
une unité d'évaluation (3) qui évalue au moins une sortie du capteur, l'unité d'évaluation comparant de préférence avec une plage de tolérance prédéterminée afin de surveiller si une condition de défaut se produit pendant le fonctionnement de la chaîne porte-câbles (10);
**caractérisé en ce que**
le capteur (15; 25; 35; 45; 55; 65; 75) fonctionne sans contact et est disposé de telle sorte que le capteur (15; 25; 35; 45; 55; 65; 75) interagit à distance avec au moins une partie de l'arc de déflexion (13) et/ou une partie du brin mobile (11), et génère une sortie qui est fonction de la position et/ou de la vitesse de la partie en interaction de la chaîne porte-câbles (10).

2. Système de surveillance selon la revendication 1, **caractérisé en ce que** le capteur (15; 25; 35; 45; 65; 75) est disposé de telle sorte que la zone de détection du capteur est orientée dans la direction longitudinale de la chaîne porte-câbles (10).

3. Système de surveillance selon la revendication 1 ou 2, **caractérisé en ce que** le capteur est configuré comme un capteur de détection non mécanique, en particulier comme un capteur de détection optique (15; 25; 35; 45; 55; 65).

4. Système de surveillance selon la revendication 3, **caractérisé en ce que** le capteur (15; 25; 45) est configuré comme un télémètre ou un vélocimètre pour la mesure optique.

5. Le système de surveillance selon la revendication 3, **caractérisé en ce que** le capteur est configuré comme un capteur d'imagerie (55; 65) pour le traitement numérique des images.

6. Système de surveillance selon l'une des revendications 1 à 4, en particulier selon la revendication 5, **caractérisé en ce qu'**il est prévu sur la chaîne porte-câbles (10), dans le sens longitudinal, une série de caractéristiques de reconnaissance (69) qui sont détectables de l'extérieur, en particulier optiquement.

7. Système de surveillance selon l'une des revendications 1 à 6, en particulier selon la revendication 4, **caractérisé en ce que** le capteur (15; 45; 65) détecte une variable d'état de l'arc de déflexion (13), en particulier la position et/ou la vitesse de l'arc de déflexion.

8. Système de surveillance selon l'une des revendications 1 à 7, en particulier selon la revendication 7, **caractérisé en ce que** le capteur (45) est disposé sur l'élément d'entraînement (4) ou sur le second point de raccordement.

9. Système de surveillance selon l'une des revendications 1 à 8, en particulier selon la revendication 8, **caractérisé en ce que** le système détermine une vitesse relative ou un rapport de vitesse entre l'élément d'entraînement (4) et l'arc de déflexion (13) et compare la valeur ainsi déterminée avec une plage de tolérance prédéterminée.

10. Système de surveillance selon l'une des revendications 1 à 7, **caractérisé en ce que** le capteur (15; 25; 35; 55; 65) est disposé de manière stationnaire afin de détecter une variable d'état du brin mobile (12) et/ou de l'arc de déflexion.

11. Système de surveillance selon la revendication 10, **caractérisé en ce que** le capteur (15; 25; 35; 45)
- est disposé au-dessus de la chaîne porte-câbles (10) et détecte la position d'au moins une partie du brin mobile (12) et/ou de l'arc de déflexion (13); ou
- est disposé essentiellement à la hauteur de l'arc de déflexion (13) et de manière opposée à celui-ci, afin de détecter la position et/ou la vitesse de l'arc de déflexion (13) .

12. Système de surveillance selon la revendication 10, **caractérisé en ce que**
- le capteur (25) est configuré avec une cellule photo et n'interagit qu'en cas de défaillance avec une partie de la chaîne porte-câbles (10) ;
- le capteur (35) est configuré avec une boucle d'induction et n'interagit qu'en cas de défaillance avec une partie de la chaîne porte-câbles (10).

13. Système de surveillance selon l'une des revendications précédentes, **caractérisé en ce que**
- le capteur (55; 65) interagit avec deux ou plusieurs chaînes porte-câbles; et/ou
- que plusieurs capteurs (75) interagissent avec ladite chaîne porte-câbles (10).

14. Système de surveillance selon l'une des revendications précédentes, **caractérisé en ce que** la chaîne porte-câbles comprend une pluralité de maillons de chaîne reliés entre eux de manière articulée et est notamment mobile en va-et-vient dans un plan de mouvement entre deux positions finales.

15. Agencement pour un système de surveillance du fonctionnement d'une chaîne porte-câbles, en particulier selon l'une des revendications précédentes 1 à 14, comprenant une chaîne porte-câbles (10) destinée à guider au moins une ligne, telle qu'un câble, un tuyau ou similaire, entre un premier point de raccordement sur une base (2) et un second point de raccordement sur un élément d'entraînement (4) et mobile par rapport au premier, la chaîne porte-câbles (10) formant un brin mobile (12), un brin fixe (11) et un arc de déflexion (13) entre les deux brins;
au moins un capteur générant au moins une sortie en fonction de l'état de la chaîne porte-câbles;
**caractérisé en ce que**
le capteur (15; 25; 35; 45; 55; 65) fonctionne sans contact et est disposé de manière à interagir à distance avec au moins une partie de l'arc de déflexion et/ou une partie du brin mobile pour générer une sortie, qui est fonction de la position et/ou de la vitesse de la partie en interaction.
